# EUROPÄISCHE PATENTANMELDUNG

(11) **EP 4 498 286 A1**
(43) Veröffentlichungstag der Anmeldung: **29.01.2025**
(21) Anmeldenummer: 23187174.0
(22) Anmeldetag: 24.07.2023
(51) Int. Cl.: G06N 3/088, G06N 5/02, G06N 3/09

(54) **COMPUTER-IMPLEMENTIERTES VERFAHREN ZUM TRAINIEREN EINES MACHINE-LEARNING-MODELLS**

(71) Anmelder: Siemens Aktiengesellschaft, 80333 München (DE)
(72) Erfinder: Bartholdt, Jörg, 81737 München (DE); Jansch dos Santos Rocha, Marcos, 80803 München (DE); Stückjürgen, Christoph, 80807 München (DE)
(74) Vertreter: Siemens Patent Attorneys

(57) **Zusammenfassung**

Die Erfindung betrifft ein computer-implementiertes Verfahren zum zum Trainieren eines Machine-Learning-Modells, umfassend die Schritte: a. Bereitstellen eines Trainingsdatensatzes, umfassend mindestens einen Testbericht in Bezug auf einen ersten Datensatz und einen zweiten Datensatz und eine Einschätzung in Bezug auf mindestens ein Kriterium des ersten Datensatzes und des zweiten Datensatzes (S1); wobei der erste Datensatz und der zweite Datensatz jeweils eine Mehrzahl von Datenelementen aufweisen; wobei der zweite Datensatz ein im Vergleich zum ersten Datensatz geänderter Datensatz ist und mindestens eine Änderung aufweist; wobei der Trainingsdatensatz ein Kennzeichen umfasst den den zweiten Datensatz für eine Anwendung freizugeben; und b. Trainieren des Machine-Learning-Modells auf Basis des Trainingsdatensatzes (S2); und c. Bereitstellen des trainierten Machine-Learning-Modells als Ausgabe (S3).

## Beschreibung

### 1. Technisches Gebiet

Die Erfindung betrifft ein computer-implementiertes Verfahren zum Trainieren eines Machine-Learning-Modells. Ferner ist die Erfindung auf ein entsprechendes computer-implementiertes Verfahren zum Klassifizieren eines Eingabedatensatzes gerichtet sowie entsprechende technische Systeme.

### 2. Stand der Technik

Daten gewinnen im Zuge der Automatisierung u.a. von Industrie 4.0 zunehmend an Bedeutung. In diesem Zusammenhang ist der Begriff "Big Data" (große Datenmengen) bekannt. Der Begriff "Big Data" bezeichnet dabei die Daten, die in großer Vielfalt ("Variety"), in großen Mengen ("Volume") und mit hoher Geschwindigkeit ("Velocity") anfallen. Die großen Datenmengen stellen für die Industrie einen enormen Mehrwert dar, beispielsweise in der industriellen Fertigung oder im Bau von industriellen Anlagen. Die großen Datenmengen fallen üblicherweise aus verschiedenen Fachbereichen wie z.B. Engineering, Logistik und Angebotserstellung an.

Im Anlagenbau ist es beispielsweise wünschenswert zu wissen welche technischen Komponenten für die industrielle Anlage benötigt werden und welche davon bereits vorhanden sind, somit nicht mehr benötigt werden. Eine solche Anfrage erfordert Daten aus verschiedenen Fachbereichen bzw. Datenquellen, in diesem Fall aus dem Engineering: "Welche technischen Komponenten sind erforderlich?" und aus der Logistik: "Welche technischen Komponenten sind bereits in der Anlage vorhanden?"

Durch Systeme zur Datenintegration können die relevanten Daten aus mehreren Quellsystemen mittels einer Datenanfrage abgerufen werden.

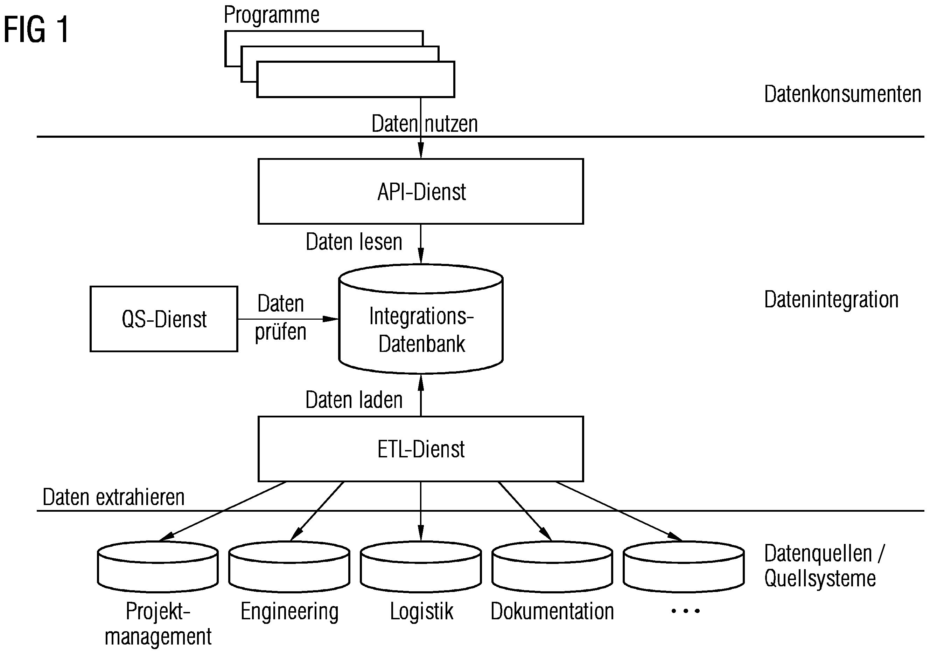

Solche Systeme sind aus dem Stand der Technik bekannt und weisen einen ETL (Extract, Transform, Load) - Dienst, QS (Qualitätssicherung) - Dienst und einen API (Application Programming Interface) - Dienst auf, wie in Figur 1 dargestellt.

Der ETL-Dienst extrahiert und verknüpft Daten aus den Quellsystemen und speichert sie als Datenpunkte in einer Integrations-Datenbank.

Der QS-Dienst überprüft die Datenpunkte auf Aktualität und Vollständigkeit etc. und erzeugt Testreports über die Qualität der Daten.

Der API-Dienst offeriert maßgeschneiderte Schnittstellen zum Zugriff auf die Integrations-Datenbank. Diese Schnittstellen können datenkonsumierende Programme organisationsweit nutzen und damit fachbereichsspezifische oder fachbereichsübergreifende Aufgaben lösen.

In einem Kundenprojekt wird der Datensatz für die Integrations-Datenbank üblicherweise täglich neu erzeugt. Nachteilig an diesem neu erzeugten Datensatz ist allerdings, dass in diesem Datensatz oft bestimmte Daten fehlen, es unerklärliche Fluktuationen der Daten verglichen mit dem Vortag gibt oder bestimmte Datenpunkte veraltet sind. Die Ursachen der Abweichungen können sich aus den verschiedenen Quellsystemen ergeben, aus denen die Daten aggregiert werden, sowie auch im ETL-Dienst liegen, welcher den Datensatz erzeugt.

Daher ist es erforderlich eine Entscheidung zu treffen, ob der neu erzeugte und somit aktualisierte Datensatz in die Produktion überführt werden soll oder ob der andere ältere (nicht aktualisierte) Datensatz weiterhin verwendet werden soll. Diese Entscheidung wird gemäß dem Stand der Technik bis heute manuell durch eine Person getroffen, üblicherweise ohne dass starre Regeln definiert sind. Die Entscheidung kann auch als GO/NOGO Entscheidung bezeichnet werden.

Nachteilig an dem manuellen Ansatz ist jedoch, dass dieser ineffizient, fehleranfällig und wenig zuverlässig ist. Der manuelle Ansatz führt u.a. zu täglichem Diskussionsaufwand zwischen den Data-Release-Managern, welche die Entscheidung treffen, den Testern und anderen Parteien. Somit entstehen ein erheblicher Zeitaufwand sowie Kosten für eine Entscheidung. Weiterhin kann bei Ausfall des Data-Release-Managers nicht mehr auf seinen Erfahrungsschatz und Bauchgefühl zurückgegriffen werden.

Die vorliegende Erfindung stellt sich daher die Aufgabe ein computer-implementiertes Verfahren zum Trainieren eines Machine-Learning-Modells bereitzustellen, welches effizienter und zuverlässiger ist.

### 3. Zusammenfassung der Erfindung

Die oben genannte Aufgabe wird erfindungsgemäß durch ein computer-implementiertes Verfahren zum Trainieren eines Machine-Learning-Modells gelöst, umfassend die Schritte:
a. Bereitstellen eines Trainingsdatensatzes, umfassend mindestens einen Testbericht in Bezug auf einen ersten Datensatz und einen zweiten Datensatz und eine Einschätzung in Bezug auf mindestens ein Kriterium des ersten Datensatzes und des zweiten Datensatzes; wobei
   der erste Datensatz und der zweite Datensatz jeweils eine Mehrzahl von Datenelementen aufweisen; wobei
   der zweite Datensatz ein im Vergleich zum ersten Datensatz geänderter Datensatz ist und mindestens eine Änderung aufweist; wobei
   der Trainingsdatensatz ein Kennzeichen umfasst den zweiten Datensatz für eine Anwendung freizugeben; und
b. Trainieren des Machine-Learning-Modells auf Basis des Trainingsdatensatzes; und
c. Bereitstellen des trainierten Machine-Learning-Modells als Ausgabe.

Dementsprechend ist die Erfindung auf ein computer-implementiertes Verfahren zum Trainieren eines Machine-Learning-Modells gerichtet. Mit anderen Worten wird ein Machine-Learning-Modell trainiert. Das Machine-Learning-Modell kann auch als Modell zum Maschinellen Lernen ausgelegt werden.

In einem ersten Verfahrensschritt wird der Trainingsdatensatz als Eingabe bereitgestellt. Der Trainingsdatensatz kann dabei über eine oder mehrere Eingabeschnittstellen einer Recheneinheit empfangen werden. Zusätzlich oder alternativ können die Ausgabedaten in Form des trainierten Machine-Learning-Modells auch über eine oder mehrere Ausgabeschnittstellen an eine Recheneinheit gesendet werden. Die Schnittstellen können als serielle oder parallele Schnittstellen ausgebildet sein. Die Schnittstellen stellen vorteilhafterweise eine effiziente und reibungslose Datenübertragung zwischen Recheneinheiten sicher. Die Daten können bidirektional ausgetauscht werden ohne Datenstau.

Der Trainingsdatensatz weist einen Testbericht und eine Einschätzung auf, welche sich auf zwei Datensätze beziehen, nämlich den ersten und den zweiten Datensatz mit jeweiligen Datenelementen. Die zwei Datensätze weichen voneinander ab. Der erste Datensatz wird geändert und resultiert in den zweiten und somit geänderten Datensatz. Der zweite Datensatz weist folglich die eine oder die mehreren Änderungen auf. Beispielsweise wird der erste Datensatz aktualisiert. Der zweite Datensatz ist das Ergebnis der Aktualisierung und folglich auch der aktualisierte Datensatz.

Der Trainingsdatensatz kann in einer flüchten oder nichtflüchtigen Speichereinheit gespeichert werden, bevorzugt Datenbank oder Cloud. Dementsprechend kann die Speichereinheit als eine Datenbank, eine Cloud oder sonstige flüchtige, nicht-flüchtige Speichereinheit ausgebildet sein. Die Speichereinheit ermöglicht eine zuverlässige und schnelle Datensicherung. Die Speichereinheit kann hinsichtlich ihrer Speicherkapazität sowie Skalierbarkeit etc. flexibel ausgewählt werden.

Der Testbericht ist ein maschinenlesbares Dokument, welches die Ergebnisse verschiedener Prüfungen von einem Datensatz hinsichtlich Vollständigkeit, Korrektheit und/oder Aktualität enthält. Bevorzugt wird der Testbericht durch ein automatisiertes Testprogramm erstellt, welches nach Erstellung des Datensatzes ausgeführt wird.

Die Einschätzung ist eine Bewertung des Datensatzes im Hinblick auf die aktuellen Bedürfnisse der Nutzer des Datensatzes. Diese kann als numerischer Wert, z. B. zwischen 0 und 9 abgebildet werden. Die Einschätzung kann aus den Testberichten, Domänenwissen, Nutzerinformationen, Nutzerfeedback und/oder aktuellen politischen Ereignissen abgeleitet werden.

Weiterhin weist der Trainingsdatensatz auch das Kennzeichen auf den den zweiten Datensatz für eine Anwendung freizugeben. Das Kennzeichen kann auch als Kennzeichnung, Label oder Tag bezeichnet werden. Das Kennzeichen kennzeichnet dabei, welcher der beiden Datensätze freigeben wird und somit als Datenbasis für die Anwendung verwendet wird. Mit anderen Worten wird entschieden, ob der erste oder der zweite Datensatz verwendet werden soll. Eine beispielhafte Anwendung ist die Steuerung einer Robotereinheit in einer Industrieanlage durch eine Speicherprogrammierbare Steuerung. Das Kennzeichen gibt an mit welcher der Steuerdatensätze die Robotereinheit gesteuert wird. Die Entscheidung wird durch das gewählte Kriterium beeinflusst, wie Qualität oder auch Nachhaltigkeitskriterien. Die Robotereinheit kann mit den älteren hoch qualitativen Daten betrieben werden oder mit neueren aktuelleren und weniger qualitativen Daten etc.

In den weiteren Verfahrensschritten wird das Machine-Learning-Modell trainiert und nach erfolgtem Training als Ausgabe bereitgestellt. Nach dem Training kann das Machine-Learning-Modell auf Eingabedatensätze angewandt werden.

Der Vorteil der vorliegenden Erfindung liegt folglich darin eine Klassifizierung und auch Classifier bereitzustellen, womit Entscheidungen im Gegensatz zum Stand der Technik zuverlässiger und effizienter getroffen werden. Bezugnehmend auf das obige Beispiel können die Robotereinheiten einer Industrieanlage zuverlässiger und somit weniger fehleranfällig gesteuert werden. Alternativ oder zusätzlich können die Robotereinheiten auch effizienter instandgehalten werden, wie ausgetauscht werden. Die Industrieanlage und deren Kriterien wie Nachhaltigkeit oder Instandhaltung etc. werden dadurch insgesamt optimiert.

In einer Ausgestaltung ist das Machine-Learning-Modell ein Modell zum unüberwachten Maschinellen Lernen, unsupervised Machine Learning, bevorzugt ein Neuronales Netzwerk. Das Modell kann vorteilhafterweise flexibel in Abhängigkeit von der konkreten Anwendung, den Eingabedaten, dem zugrundeliegenden technischen System, den Nutzeranforderungen und/oder anderen Bedingungen gewählt werden.

In einer weiteren Ausgestaltung sind der erste Datensatz und der zweite Datensatz jeweils Knowledge Graphen, wobei der jeweilige Knowledge Graph eine Mehrzahl von Tripel als Datenelemente aufweist. Dementsprechend liegen die Datensätze als Graph-Datenbank in Form der Knowledge Graphen vor. Die Knowledge Graphen weisen herkömmlicherweise Tripel auf. Die Knoten stellen die Entitäten und die Kanten stellen die Relationen verschiedener Entitäten zueinander dar. Beispielhafte Entitäten sind die technischen Einheiten, wie Robotereinheiten, der obigen Industrieanlage. Alternativ können die Datensätze auch in anderen Datenstrukturen vorliegen.

In einer weiteren Ausgestaltung ist der Testbericht ein Plausibilitätsbericht. Dementsprechend ist der Plausibilitätsbericht auszulegen als maschinenlesbares Dokument, welches die Ergebnisse stichprobenartiger Plausibilitätsprüfungen in Bezug auf den Datensatz enthält. Zusätzlich oder alternativ kann der Testbericht auch eine oder mehrere Informationen über die Anzahl der Tripel des ersten und/oder des zweiten Datensatzes, das Delta der Tripel zwischen den zwei Datensätzen, inwiefern ein Datensatz ein erwartetes Ergebnis auf die Anfrage eines Nutzers liefert etc. sein.

In einer weiteren Ausgestaltung ist das mindestens eine Kriterium eine Qualität, wobei sich die Qualität bevorzugt auf die Korrektheit, die Vollständigkeit und/oder die Aktualität des Datensatzes bezieht. Die Aktualität bezieht sich auf eine Aktualisierung bzw. ein Update des ersten Datensatzes. Der Zeitpunkt der letzten Aktualisierung kann durch einen Zeitstempel erfasst werden. Alternativ zur Qualität kann das Kriterium auch einen Nachhaltigkeitsaspekt betreffen, wie C02 Footprint oder Lebensdauer.

In einer weiteren Ausgestaltung umfasst der Eingabedatensatz weitere Eingabedaten, wobei die weiteren Eingabedaten bevorzugt mindestens eine Nutzerinformation und/oder mindestens ein Ereignis betreffen. Dementsprechend wird der Eingabedatensatz erweitert und die Qualität der Trainingsdaten somit verbessert. Die Nutzerinformationen sind Informationen oder Daten, die von einem Nutzer bereitgestellt werden. Diese Nutzerinformationen können in einer Speichereinheit gesammelt und gespeichert werden, von dieser empfangen werden. Alternativ können die Nutzerinformationen auch über eine oder mehrere Nutzerschnittstellen eingegeben und empfangen werden. Die Nutzerinformationen können eine oder mehrere Nutzeranfragen betreffen oder Nutzerfeedback umfassen. Der Nutzer fragt an welchen der beiden Datensätze freigegeben wird und verwendet werden kann. Folglich kann das Verfahren zum Klassifizieren durch eine Nutzeranfrage initiiert werden.

Ferner betrifft die Erfindung ein computer-implementiertes Verfahren zum Klassifizieren eines Eingabedatensatzes:
a. Bereitstellen des Eingabedatensatzes, umfassend mindestens einen Testbericht in Bezug auf einen ersten Datensatz und auf einen zweiten Datensatz und eine Einschätzung in Bezug auf mindestens ein Kriterium des ersten Datensatzes und des zweiten Datensatzes; wobei
   der erste Datensatz und der zweite Datensatz jeweils eine Mehrzahl von Datenelementen aufweisen; wobei
   der zweite Datensatz ein im Vergleich zu einem ersten Datensatz geänderter Datensatz ist und mindestens eine Änderung aufweist; wobei
b. Klassifizieren des Eingabedatensatzes mittels des trainierten Machine-Learning-Modells nach einem der vorhergehenden Ansprüche;
c. Bereitstellen des klassifizierten Eingabedatensatzes, wobei der klassifizierte Eingabedatensatz eine Entscheidung umfasst den zweiten Datensatz für eine Anwendung freizugeben.

Ferner betrifft die Erfindung ein technisches System zum Durchführen des obigen Verfahrens.

Die Erfindung kann ferner ein oder mehrere Computerprogrammprodukte mit einem Computerprogramm, das Mittel zur Durchführung der oben beschriebenen Verfahren betreffen, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt eine schematische Ansicht eines Systems zur Datenintegration gemäß dem Stand der Technik.
- FIG 2: zeigt ein schematisches Ablaufdiagramm des erfindungsgemäßen Verfahrens.

### 5. Beschreibung der bevorzugten Ausführungsformen

Im Folgenden werden bevorzugte Ausführungsformen der vorliegenden Erfindung in Bezug auf die Figuren beschrieben.

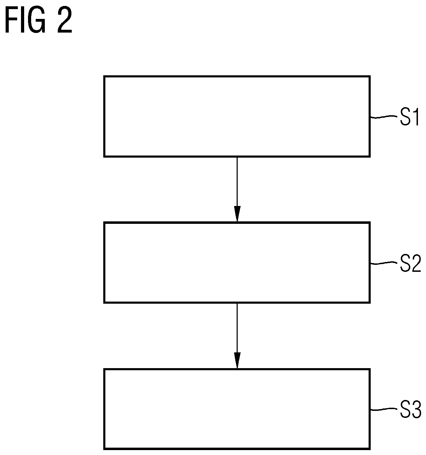

Figur 2 stellt ein Ablaufdiagramm des erfindungsgemäßen Verfahrens mit den Verfahrensschritten S1 bis 3 schematisch dar.

Im ersten Verfahrensschritt wird der Trainingsdatensatz bereitgestellt S1. Der Trainingsdatensatz umfasst die Testberichte in Bezug auf den ersten Datensatz und den zweiten Datensatz. Weiterhin umfasst der Trainingsdatensatz eine Einschätzung in Bezug auf das Kriterium des ersten Datensatzes und des zweiten Datensatzes. Im zweiten Verfahrensschritt wird das Machine-Learning-Modell auf Basis des Trainingsdatensatzes trainiert S2. Im letzten Verfahrensschritt wird das trainierte Machine-Learning-Modell als Ausgabe bereitgestellt S3.

Gemäß einer Ausführungsform der Erfindung wird das Machine-Learning-Modell mittels Supervised Machine Learning trainiert. Die Basis ist die Erzeugung einer Ground Truth für das Training des supervised Machine-Learning-Modells. Aus den historischen Data-Rollout-Entscheidungen können die Trainingsdaten erzeugt werden, beispielsweise wie folgt.

| | |
|---|---|
| 14. Jan: | Input: Trainingsdatensatz mit Testberichten |
| | Output: Kennzeichen |
| 15. Jan: | ... |
| 16. Jan: | |

Weitere Eingabedaten können hinzugefügt werden, wie die Nutzerinformation. Die Nutzerinformation kann die Erfassung des Nutzerfeedbacks über die Nutzbarkeit des heutigen Datensatzes betreffen. Viele Beschwerden deuten beispielsweise darauf hin, dass der heutige Datensatz vielleicht doch nicht in Produktion hätte gehen sollen.

Die aktiv benutzen Nutzeranfragen des Vortags können ebenfalls einbezogen werden. Was die Nutzer heute nachfragen, wird in der Regel morgen auch noch wichtig sein. Eine Verschiebung ist typischerweise ein langsamer Vorgang, geht z.B. Hand-in-Hand mit dem Fokus auf bestimmte Anfragen in Abhängigkeit des Projektstadiums. Hier können entstehende Muster wie z.B. Jahreszeitenabhängigkeiten oder auch aus einer Folge von Anfrage-Häufungen der letzten Tage gelernt werden und eine Voraussage über das Nutzerverhalten für den heutigen Tag gestellt werden, so dass die Gewichtung der Input-Werte durch einen Machine-Learning Ansatz "gelernt" wird.

Weitere beispielhafte Eingabedaten sind tagespolitische Ereignisse und Daten aus Social-Media-Kanälen.

Die Datenbasis für die Entscheidung wird durch die weiteren Eingabedaten erheblich verbessert.

Weiterhin können künstlich Trainingsdaten erzeugt werden. Dazu werden künstlich erzeugte Testdaten dem Data-Release-Manager vorgelegt, der diese entsprechend bewertet. Diese zusätzlichen Trainingsdaten können die Ground Truth ergänzen und erzeugen dadurch mehr Testdaten für das Training.

## Patentansprüche

1. Computer-implementiertes Verfahren zum Trainieren eines Machine-Learning-Modells, umfassend die Schritte:
a. Bereitstellen eines Trainingsdatensatzes, umfassend mindestens einen Testbericht in Bezug auf einen ersten Datensatz und einen zweiten Datensatz und eine Einschätzung in Bezug auf mindestens ein Kriterium des ersten Datensatzes und des zweiten Datensatzes (S1); wobei
der erste Datensatz und der zweite Datensatz jeweils eine Mehrzahl von Datenelementen aufweisen; wobei
der zweite Datensatz ein im Vergleich zum ersten Datensatz geänderter Datensatz ist und mindestens eine Änderung aufweist; wobei
der Trainingsdatensatz ein Kennzeichen umfasst den zweiten Datensatz für eine Anwendung freizugeben; und
b. Trainieren des Machine-Learning-Modells auf Basis des Trainingsdatensatzes (S2); und
c. Bereitstellen des trainierten Machine-Learning-Modells als Ausgabe (S3).

2. Computer-implementiertes Verfahren nach Anspruch 1, wobei das Machine-Learning-Modell ein Modell zum unüberwachten Maschinellen Lernen, unsupervised Machine Learning, ist, bevorzugt ein Neuronales Netzwerk.

3. Computer-implementiertes Verfahren nach Anspruch 1 oder Anspruch 2, wobei der erste Datensatz und der zweite Datensatz jeweils Knowledge Graphen sind, wobei der jeweilige Knowledge Graph eine Mehrzahl von Tripel als Datenelemente aufweist.

4. Computer-implementiertes Verfahren nach einem der vorhergehenden Ansprüche, wobei der Testbericht ein Plausibilitätsbericht ist.

5. Computer-implementiertes Verfahren nach einem der vorhergehenden Ansprüche, wobei das mindestens eine Kriterium eine Qualität ist, wobei sich die Qualität bevorzugt auf die Korrektheit, die Vollständigkeit und/oder die Aktualität des Datensatzes bezieht.

6. Computer-implementiertes Verfahren nach einem der vorhergehenden Ansprüche, wobei der Eingabedatensatz weitere Eingabedaten umfasst, wobei die weiteren Eingabedaten bevorzugt mindestens eine Nutzerinformation und/oder mindestens ein Ereignis betreffen.

7. Computer-implementiertes Verfahren zum Klassifizieren eines Eingabedatensatzes:
a. Bereitstellen des Eingabedatensatzes, umfassend mindestens einen Testbericht in Bezug auf einen ersten Datensatz und auf einen zweiten Datensatz und eine Einschätzung in Bezug auf mindestens ein Kriterium des ersten Datensatzes und des zweiten Datensatzes; wobei
der erste Datensatz und der zweite Datensatz jeweils eine Mehrzahl von Datenelementen aufweisen; wobei
der zweite Datensatz ein im Vergleich zu einem ersten Datensatz geänderter Datensatz ist und mindestens eine Änderung aufweist;
b. Klassifizieren des Eingabedatensatzes mittels des trainierten Machine-Learning-Modells nach einem der vorhergehenden Ansprüche;
c. Bereitstellen des klassifizierten Eingabedatensatzes, wobei der klassifizierte Eingabedatensatz eine Entscheidung umfasst den den zweiten Datensatz für eine Anwendung freizugeben.

8. Technisches System zum Durchführen des Verfahrens nach einem der vorhergehenden Ansprüche 1 bis 7.

9. Technisches System zum Durchführen des Verfahrens nach Anspruch 8.
